# EUROPÄISCHE PATENTSCHRIFT

(11) **EP 4 571 097 B1**
(45) Veröffentlichungstag und Bekanntmachung des Hinweises auf die Patenterteilung: **24.12.2025**
(21) Anmeldenummer: 24020343.0
(22) Anmeldetag: 10.12.2024
(51) Int. Cl.: F03D 3/00, F03D 15/00

(54) **ERZEUGUNG VON ELEKTRISCHEM STROM DURCH WINDKRAFT**
GENERATING ELECTRIC POWER BY WIND POWER
PRODUCTION D'ÉNERGIE ÉLECTRIQUE PAR ÉNERGIE ÉOLIENNE

(30) Priorität: 14.12.2023 DE 102023135121
(43) Veröffentlichungstag der Anmeldung: 18.06.2025
(73) Patentinhaber: Meier, Norbert, 92369 Sengenthal / OT Forst (DE)
(72) Erfinder: Meier, Norbert, 92369 Sengenthal / OT Forst (DE)
(74) Vertreter: Schneider, Andreas

(56) Entgegenhaltungen:
- EP-A1- 3 115 603
- CN-U- 204 984 730

## Beschreibung

Die Erfindung betrifft eine windkraftbetriebene Vorrichtung zur Erzeugung von elektrischem Strom sowie ein Verfahren zur Erzeugung von elektrischem Strom durch Windkraft.

Windkraftanlagen für private Haushalte und andere Verbraucher mit geringem Stromverbrauch werden immer beliebter. Der Wirkungsgrad derartiger Anlagen ist jedoch oft schlecht.

Aus EP3 115 603 A1 ist eine Vorrichtung zur Erzeugung von elektrischem Strom bekannt, die eine Rotationseinrichtung mit einem Hebelarm und einer Unwuchtmasse umfaßt, wobei die Rotationseinrichtung mittels Druckluft mit einem Antriebsmoment beaufschlagbar ist, wobei die Druckluft aus einem Druckluftspeicher entnehmbar ist. Dabei ist beschrieben, daß der Druckluftspeicher zuvor mit Hilfe einer separaten, windkraftbetriebenen Vorrichtung mit Druckluft befüllt werden kann. Die Vorrichtung zur Erzeugung von elektrischem Strom selbst ist jedoch nicht windkraftbetrieben. Die Stromerzeugung unter Verwendung dieser Vorrichtung ist nicht von der Windstärke des zur Verfügung stehenden Windes abhängig.

Eine Aufgabe der vorliegenden Erfindung ist es, eine Technik zur windbetriebenen Erzeugung von elektrischem Strom bereitzustellen, die einen verbesserten Wirkungsgrad aufweist.

Diese Aufgabe wird durch eine Vorrichtung nach Anspruch 1 bzw. durch ein Verfahren nach Anspruch 11 gelöst. Vorteilhafte Ausführungen der Erfindung sind in den Unteransprüchen angegeben bzw. ergeben sich aus der nachfolgenden Beschreibung und/oder den beigefügten Figuren. Die im Folgenden im Zusammenhang mit der erfindungsgemäßen Vorrichtung erläuterten Vorteile und Ausgestaltungen gelten sinngemäß auch für das erfindungsgemäße Verfahren und umgekehrt.

Die erfindungsgemäße windkraftbetriebene Vorrichtung zur Erzeugung von elektrischem Strom umfaßt einen Vertikalrotor, eine erste Antriebswelle, die von dem Vertikalrotor antreibbar ist, eine zweite Antriebswelle, einen elektrischen Generator, der von der zweiten Antriebswelle antreibbar ist und eine bewegbare Hebeleinrichtung, wobei die erste Antriebswelle zum Antrieb der Hebeleinrichtung mit dieser in Wirkverbindung steht, und wobei die Hebeleinrichtung zum Antrieb der zweiten Antriebswelle mit dieser in Wirkverbindung steht. Dabei umfaßt die Hebeleinrichtung ein Hebelgestänge, welches Hebelgestänge derart ausgeführt ist, daß es eine Pendelbewegung zwischen einer ersten Pendelstellung und einer zweiten Pendelstellung vollführen kann, ohne die Wirkverbindung zu der ersten Antriebswelle und zu der zweiten Antriebswelle zu verlieren, wobei die Hebeleinrichtung mindestens ein mit dem Hebelgestänge unter Verwendung eines Verbindungselements verbundenes zusätzliches Bewegungselement umfaßt, wobei das mindestens eine zusätzliche Bewegungselement derart ausgeführt ist, daß es bei einer Bewegung der Hebeleinrichtung eine periodische lineare Bewegung vollführt, und wobei die Wirkverbindung zwischen der Hebeleinrichtung und der zweiten Antriebswelle unter Verwendung dieses mindestens einen Bewegungselements hergestellt ist.

Bei dem erfindungsgemäßen Verfahren zur Erzeugung von elektrischem Strom durch Windkraft treibt ein Vertikalrotor eine erste Antriebswelle an, wird eine mit der ersten Antriebswelle in Wirkverbindung stehende, bewegbare Hebeleinrichtung von der ersten Antriebswelle angetrieben, treibt die Hebeleinrichtung eine zweite Antriebswelle an, zu welchem Zweck die Hebeleinrichtung mit der zweiten Antriebswelle in Wirkverbindung steht, und wird ein mit der zweiten Antriebswelle in Wirkverbindung stehender elektrischer Generator von der zweiten Antriebswelle angetrieben. Dabei umfaßt die Hebeleinrichtung ein Hebelgestänge, welches Hebelgestänge derart ausgeführt ist, daß es eine Pendelbewegung zwischen einer ersten Pendelstellung und einer zweiten Pendelstellung vollführt, ohne die Wirkverbindung zu der ersten Antriebswelle und zu der zweiten Antriebswelle zu verlieren, wobei die Hebeleinrichtung mindestens ein mit dem Hebelgestänge unter Verwendung eines Verbindungselements verbundenes zusätzliches Bewegungselement umfaßt, wobei das mindestens eine zusätzliche Bewegungselement derart ausgeführt ist, daß es bei einer Bewegung der Hebeleinrichtung eine periodische lineare Bewegung vollführt, und wobei die Wirkverbindung zwischen der Hebeleinrichtung und der zweiten Antriebswelle unter Verwendung dieses mindestens einen Bewegungselements hergestellt ist.

Eine Grundidee der Erfindung ist die Verwendung eines den Betrag der Kraft ändernden Kraftwandlers zwischen Vertikalrotor und Drehgenerator, wobei der Kraftwandler in Form einer Hebeleinrichtung ausgeführt ist. Auf diese Weise können auch bei vergleichsweise kleinen Drehmomenten des Vertikalrotors für den Antrieb des Stromgenerators vergleichsweise große Drehmomente an der zweiten Antriebswelle erzeugt werden. Damit wird bei Verwendung von Vertikalwindrädern ein für eine Stromerzeugung sinnvoller Generatorbetrieb auch bei geringen Windstärken möglich.

Die Hebeleinrichtung dient dabei nicht als ein beliebig austauschbares Verbindungs- oder Koppelmittel zwischen Vertikalrotor und Generator. Vielmehr definiert sie ein Grundprinzip der Erfindung. Der erfindungsgemäße Vorteil kommt dabei am stärksten zum Tragen, wenn das Verhältnis der Längen der Hebelarme (Kraftarm, Lastarm) geeignet gewählt und die Länge des von der Hebeleinrichtung gebildeten effektiven Hebelarms möglichst vollständig ausgenutzt wird. In bevorzugten Ausführungen wird die Wirkung der Hebeleinrichtung durch Zusatzgewichte andere Mittel optimiert. Im Ergebnis wird eine konstruktiv einfache Maschine zur Kraftwandlung bereitgestellt, die im Vergleich mit anderen Einrichtungen zur Stromerzeugung preiswert herstellbar ist und sich daher besonders für Windkraftanlagen für den privaten Gebrauch eignet. Dabei erfolgt ab einer bestimmten Windgeschwindigkeit ein dauerhafter, kontinuierlicher Antrieb des Generators durch den Vertikalrotor. Ein solcher Betrieb ist bereits bei geringen Windgeschwindigkeiten ab etwa 5 km/h möglich, bei einer Drehzahl der ersten Antriebswelle von etwa 20 U/min. Ausgelegt als Langsamläufer entwickelt der Vertikalrotor nur vergleichsweise wenig Geräusche, wodurch sich die Erfindung besonders auch zur Verwendung in Wohngebieten eignet.

Bei der Bewegung der Hebeleinrichtung handelt es sich gemäß einer Ausführungsform der Erfindung um eine Hin-und-Her-Bewegung (oszillatorische Bewegung) um einen Hebeldrehpunkt.

Um die Hebeleinrichtung einsetzen zu können, erfolgt gemäß einer Ausführungsform der Erfindung zweimal eine Änderung der Bewegungsform, nämlich einerseits aus der Drehbewegung der von dem Vertikalrotor angetriebenen ersten Antriebswelle in die Bewegung der Hebeleinrichtung und andererseits aus der Bewegung der Hebeleinrichtung in die Drehbewegung der zweiten Antriebswelle, die den Generator antreibt.

Gemäß einer Ausführungsform der Erfindung ist das Hebelgestänge nach Art eines inversen Pendels ausgeführt, so daß es in zwei Richtungen beweglich ist und die oszillatorische Bewegung der Hebeleinrichtung um den Hebeldrehpunkt ermöglicht.

Dabei ist das Hebelgestänge vorzugsweise derart ausgeführt, daß es einen Hebelarm umfaßt, insbesondere zur Ausbildung eines zweiseitigen Hebels. Der Kraftarm steht dabei mit der ersten Antriebswelle in Wirkverbindung und der Lastarm steht mit der zweiten Antriebswelle in Wirkverbindung. Der Hebelarm ist vorzugsweise in einem feststehenden Lager gelagert. Dabei bildet dieses Lager den Drehpunkt des Hebelarmes. Das Verhältnis der Längen von Kraftarm und Lastarm beträgt vorzugsweise mindestens 3:1. Besonders vorteilhaft sind Längenverhältnisse von mindestens 4:1.

In besonders bevorzugten Ausführungsformen der Erfindung umfaßt die Hebeleinrichtung ein oder mehrere mit dem Hebelgestänge verbundenes Zusatzgewichte. Mit Hilfe dieser Zusatzgewichte kann die Pendelbewegung des Hebelgestänges unterstützt werden.

Gemäß einer Ausführungsform der Erfindung sind Zusatzgewichte an einer oder mehreren Stellen des Hebelarmes befestigt. Auf diese Weise kann die Masseverteilung innerhalb des Hebelarmes zur Optimierung der Pendelbewegung gezielt beeinflußt werden. Zusatzgewichte können dabei insbesondere an dem freien Ende des Lastarmes und/oder an dem freien Ende des Kraftarmes vorgesehen sein, mit anderen Worten an den beiden Enden des Hebelarmes. Zusatzgewichte können aber alternativ oder zusätzlich auch an Lastarm und/oder Kraftarm in bestimmten Abständen vom Drehpunkt vorgesehen sein. Es ist auch möglich, daß Zusatzgewichte an einem mit dem Hebelarm fest verbundenen Tragarm angebracht sind, der nach Art eines Auslegers das Zusatzgewicht beabstandet von dem Hebelarm trägt.

Zur Optimierung der Pendelbewegung können Zusatzgewichte aber alternativ oder zusätzlich auch unter Verwendung von Verbindungselementen an dem Hebelarm und/oder dem Tragarm angebracht sein und/oder Zusatzgewichte sind als Pendelgewichte an mindestens einem Schwerependel angebracht, das mit dem Hebelarm, insbesondere an dem freien Ende des Lastarmes oder in der Nähe dieses freien Endes, oder einem Tragarm verbunden ist. Auf diese Weise ergibt sich eine die Pendelbewegung des Hebelgestänges unterstützende Bewegung bzw. eine der Pendelbewegung überlagerte, die Pendelbewegung zumindest zeitweise unterstützende Bewegung. Insbesondere durch Schwer- und Fliehkräfte kann sich dabei eine die Bewegung der Hebeleinrichtung unterstützende Eigendynamik entwickeln, die dazu beiträgt, daß ein dauerhafter Betrieb des Generators mit der gewünschten bzw. einer ausreichenden Drehzahl auch bei sich verändernden Windgeschwindigkeiten oder Windrichtungen aufrechterhalten wird.

Erfindungsgemäß umfaßt die Hebeleinrichtung mindestens ein mit dem Hebelgestänge, insbesondere beabstandet von dem Drehpunkt des Hebelarmes, unter Verwendung eines Verbindungselements verbundenes zusätzliches Bewegungselement. Das mindestens eine zusätzliche Bewegungselement ist dabei derart ausgeführt, daß es bei einer Bewegung der Hebeleinrichtung eine periodische lineare Bewegung vollführt. Dabei ist die Wirkverbindung zwischen der Hebeleinrichtung und der zweiten Antriebswelle
unter Verwendung dieses mindestens einen zusätzlichen Bewegungselements hergestellt.

Als ganz besonders vorteilhaft erwiesen hat sich dabei eine Ausführungsform der Erfindung, bei der das mindestens eine zusätzliche Bewegungselement als ein auf einer Fahrbahn, insbesondere einer schiefen Ebene, verfahrbares Gewicht ausgebildet ist. Vorteilhafterweise ist das Gewicht mit Rollen oder anderen geeigneten Mitteln versehen, um die während des Verfahrens auftretende Reibung zu minimieren. Durch den Einsatz eines weiteren Kraftwandlers in Gestalt einer schiefen Ebene wird der Wirkungsgrad der Windkraftanlage nochmals verbessert. Vorzugsweise sind zwei sich gegenüberliegende, entsprechend der Richtung der Pendelbewegung verfahrbare Bewegungselemente vorgesehen derart, daß die Gewichte jeweils abhängig von der Pendelstellung entlang der Fahrbahn verfahren werden. Insbesondere ist die Ausführung derart, daß bei einer Bewegung des Pendelgestänges in die erste Pendelstellung das eine Gewicht die schiefe Ebene hochgezogen wird, während das andere Gewicht die schiefe Ebene herunterfährt; bei der entgegengesetzten Bewegung des Pendelgestänges in die zweite Pendelstellung bewegen sich die Gewicht genau entgegengesetzt.

Gemäß anderer Ausführungsformen der Erfindung wird die Wirkverbindung zwischen der Hebeleinrichtung einerseits und der zweiten Antriebswelle andererseits durch Verwendung oder unter Zuhilfenahme alternativer oder zusätzlicher Hebelvorrichtungen und/oder Kraftwandler bereitgestellt. Damit soll ein besonders effizienter Betrieb des Generators erreicht werden. Insbesondere sollen hierdurch auch bei geringer Windstärke besonders große Drehmomente für den Antrieb des Stromgenerators erzeugt werden.

Gemäß der Erfindung wird die Wirkverbindung zwischen der ersten Antriebswelle und der Hebeleinrichtung und/oder die Wirkverbindung zwischen der Hebeleinrichtung und der zweiten Antriebswelle unter Verwendung eines Koppelgetriebes hergestellt, das als Übertragungsgetriebe mit Änderung der Bewegungsform wirkt.

Dieses Koppelgetriebe ist vorzugsweise in Form einer Kurbelschleife ausgeführt, in einer besonders einfachen Variante als Scotch-Yoke mit einer Gleitführung. Dabei wird ein Kurbelschleifen-Mechanismus verwendet, der die Drehbewegung einer Antriebswelle in eine lineare Bewegung eines sich hin und her bewegenden Schiebers umwandelt oder umgekehrt. Ein Stift des rotierenden Bauteils greift dabei in einen Schlitz eines Gleitbügels ein, der direkt mit dem Schieber verbunden ist. Die Verwendung anderer geeigneter Koppelgetriebe ist möglich.

Bei Verwendung des Koppelgetriebes für die Wirkverbindung zwischen der ersten Antriebswelle und der Hebeleinrichtung wird die Drehbewegung der ersten Antriebswelle in eine lineare Bewegung des Schiebers umgewandelt. Über diesen Schieber wird anschließend die Hebeleinrichtung beaufschlagt und in eine Hin-und Her-Bewegung versetzt. Gemäß einer bevorzugten Ausführungsform der Erfindung ist die Wirkverbindung zwischen der ersten Antriebswelle und der Hebeleinrichtung unter Verwendung eines an der Hebeleinrichtung angreifenden Verbindungselements hergestellt. Vorzugsweise ist der Schieber mit der Hebeleinrichtung, insbesondere dem Kraftarm des Hebelarmes des Hebelgestänges, über ein elastisches und/oder federndes Verbindungsmittel, wie beispielsweise ein elastisches Band, Seil oder dergleichen, verbunden. Durch die Elastizität der Anbindung der Hebeleinrichtung an die erste Antriebswelle wird einerseits gewährleistet, daß eine Rückwirkung de Bewegung der Hebeleinrichtung auf die Drehung des Rotors ausgeschlossen ist. Andererseits wird dadurch sichergestellt, daß sich die Hebeleinrichtung weiter bewegen kann, auch wenn sie nicht angetrieben wird.

Bei Verwendung des Koppelgetriebes für die Wirkverbindung zwischen der Hebeleinrichtung und der zweiten Antriebswelle wird eine Bewegung der Hebeleinrichtung unmittelbar oder mittelbar in eine Drehbewegung umgewandelt. Vorzugsweise wird eine von der Hin- und Her-Bewegung der Hebeleinrichtung hervorgerufene lineare Bewegung des mindestens einen Bewegungselements in eine Drehbewegung der zweiten Antriebswelle umgewandelt. Bei dieser Drehbewegung kann es sich unmittelbar um die Drehbewegung der zweiten Antriebswelle handeln. Alternativ kann zwischen dem Koppelgetriebe und der zweiten Antriebswelle aber auch ein weiteres Getriebe angeordnet sein, das als Übersetzungsgetriebe im Sinne einer Leistungsverstärkung dient, beispielsweise ein Riemengetriebe, welches das Drehmoment über zwei unterschiedlich große Riemenscheiben und einen Riemen auf die zweite Antriebswelle überträgt.

Es hat sich als besonders vorteilhaft erwiesen, wenn zum Antrieb der Windkraftanlage ein Vertikalrotor eingesetzt wird, d.h. ein Rotor mit senkrechter Drehachse. Vorzugsweise kommt dabei ein Rotor zur Anwendung, dessen Drehbewegung unabhängig von der Windrichtung ist, da dann keine Windrichtungsnachführung benötigt wird.

Gemäß einer bevorzugten Ausführungsform der Erfindung umfaßt der Vertikalrotor eine Anzahl um die vertikale Rotorachse winkelmäßig gleichverteilte Rotorflügel, wobei die Rotorflügel derart ausgebildet und unter Verwendung von den Schwenkbereich der Rotorflügel beschränkenden, vorzugsweise elastisch verformbaren Beschränkungselementen an einem Drehgestänge des Rotors angebracht sind, daß sie sich einzeln selbsttätig in den Wind stellen bzw. aus dem Wind nehmen. Die Anzahl der Flügel beträgt dabei mindestens drei; vorzugsweise werden fünf oder mehr Flügel verwendet.

Gemäß einer bevorzugten Ausführungsform der Erfindung sind die Rotorflügel als selbständig um vertikale Schwenkachsen schwenkbare, flexible Flügel ausgebildet. Vorzugsweise sind die Flügel als Segel ausgebildet und bestehen aus Segeltuch oder einem anderen geeigneten Material. Die Segel und deren Befestigungen an dem Rotorgestell sind dabei vorzugsweise derart ausgeführt, daß sie sich automatisch zur Windrichtung anstellen, d.h. die Segel richten sich von selbst zur Strömung aus, und treiben den Rotor an. Werden Segel verwendet, können diese mit einfachen Mitteln bei einem Überschreiten eines oberen Windgeschwindigkeitsgrenzwertes eingeholt werden.

Insbesondere um Anlaufschwierigkeiten bei niedrigen Windstärken vorzubeugen, sind gemäß bevorzugter Ausführungsformen der Erfindung außerdem geeignete Koppelmittel vorgesehen, die zum Trennen der Wirkverbindung zwischen Rotor und Antriebswelle bzw. Hebeleinrichtung bzw. zum Herstellen dieser Wirkverbindung in Abhängigkeit von den durch Windkraft bereitgestellten Leistung bzw. den erzielbaren Drehzahlen dienen.

Geeignete Anpassungsmittel, insbesondere Getriebe-, Kupplungs- und/oder Drehmoment- bzw. Drehzahlsteuerungsmittel, stellen das Erreichen eine optimale Arbeitsdrehzahl der zweiten Antriebswelle sicher.

In den Figuren nicht dargestellt sind Stütz-, Lager-, Halte- und Tragkonstruktionen für einzelne Komponenten der Vorrichtung.

Derartige Konstruktionen sind, ebenso wie die geeigneten Koppel- und Anpassungsmittel, dem Fachmann geläufig, so daß an dieser Stelle nicht weiter darauf eingegangen werden muß.

Ein Ausführungsbeispiel der Erfindung wird nachfolgend anhand der Zeichnungen näher erläutert. Hierbei zeigen:
- Fig. 1: eine schematische Darstellung einer erfindungsgemäßen Vorrichtung in der Ruhestellung,
- Fig. 2: eine schematische Darstellung der erfindungsgemäßen Vorrichtung in einer ersten Pendelstellung,
- Fig. 3: eine Ausführung mit alternativ angeordneten Zusatzgewichten,
- Fig. 4: eine Ausführung mit alternativ angeordneten Zusatzgewichten,
- Fig. 5: eine Ausführung mit alternativ angeordneten Zusatzgewichten,
- Fig. 6: eine perspektivische Ansicht des Vertikalrotors.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

Eine Vorrichtung 1 zur Erzeugung von elektrischem Strom umfaßt einen Vertikalrotor 2, eine erste Antriebswelle 3, die von dem Vertikalrotor 2 antreibbar ist, eine zweite Antriebswelle 4, einen elektrischen Generator 5, der von der zweiten Antriebswelle 4 antreibbar ist und eine bewegbare Hebeleinrichtung 6, wobei die erste Antriebswelle 3 zum Antrieb der Hebeleinrichtung 6 mit dieser in Wirkverbindung steht, und wobei die Hebeleinrichtung 6 zum Antrieb der zweiten Antriebswelle 4 mit dieser in Wirkverbindung steht. Dabei wird die Drehbewegung der von dem Vertikalrotor 2 angetriebenen ersten Antriebswelle 3 in eine Hin-und Her-Bewegung der Hebeleinrichtung 6 umgewandelt und die Hin-und Her-Bewegung der Hebeleinrichtung 6 wird in eine Drehbewegung der zweiten Antriebswelle 4 umgewandelt, die den Generator 5 antreibt.

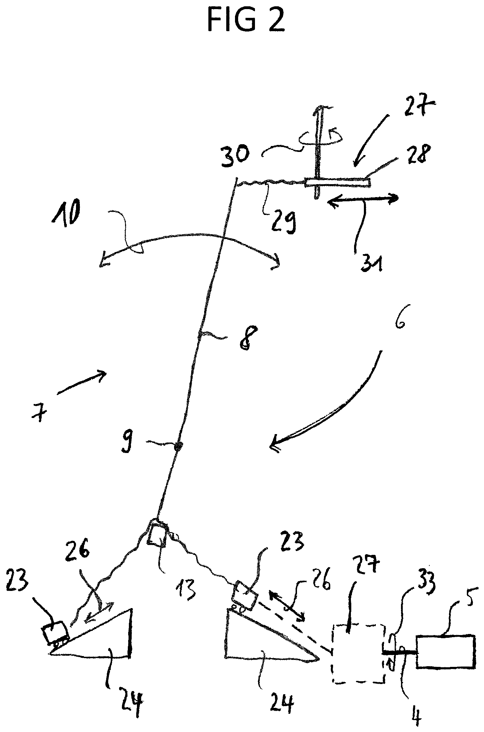

Die Hebeleinrichtung 6 umfaßt ein Hebelgestänge 7, das eine Pendelbewegung zwischen einer ersten Pendelstellung und einer zweiten Pendelstellung vollführen kann, ohne die Wirkverbindung zu der ersten Antriebswelle 3 und zu der zweiten Antriebswelle 4 zu verlieren. Die Situation der ersten Pendelstellung ist in Fig. 2 skizziert. Das Hebelgestänge 7 ist nach Art eines inversen Pendels ausgeführt, so daß es in zwei Richtungen beweglich ist und die oszillatorische Pendelbewegung 10 der Hebeleinrichtung 6 um einen Hebeldrehpunkt 9 ermöglicht. Dabei umfaßt das Hebelgestänge 7 einen Hebelarm 8 zur Ausbildung eines zweiseitigen Hebels, der ein inverses Pendel bildet. Der Kraftarm 11 des Hebelarmes 8 steht mit der ersten Antriebswelle 3 in Wirkverbindung und der Lastarm 12 des Hebelarmes 8 steht mit der zweiten Antriebswelle 4 in Wirkverbindung. Der Hebelarm 8 ist in einem feststehenden Lager gelagert, das den Drehpunkt 9 des Hebelarmes 8 bildet.

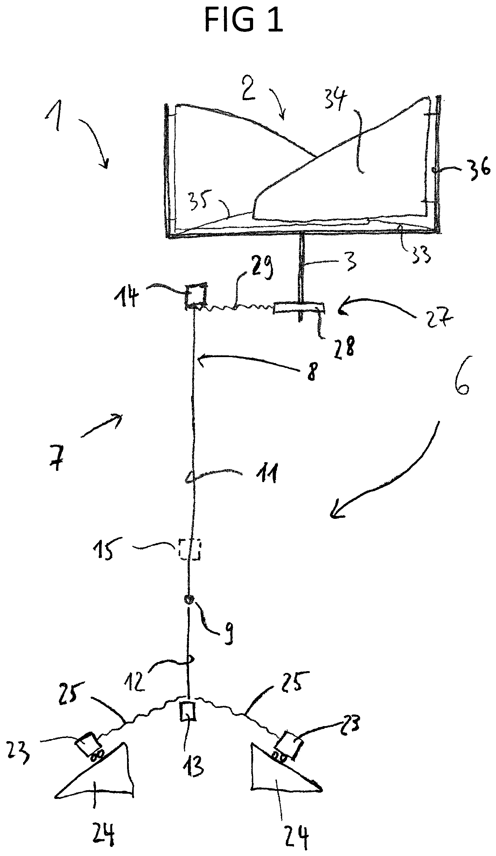

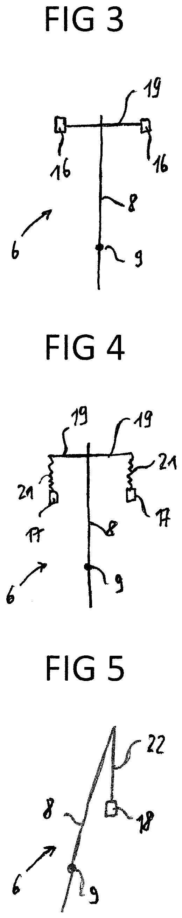

Ein Zusatzgewicht 13, das an dem freien Ende des Lastarmes 12 angebracht ist, wird in Fig. 1 dargestellt. In Fig. 1 lediglich angedeutet sind Zusatzgewichte 14, 15, die an dem freien Ende des Kraftarmes 11 bzw. in einem definierten Abstand vom Drehpunkt 9 an dem Hebelarm 8 angebracht sind. In Fig. 3 sind paarweise vorhandene Zusatzgewichte 16 dargestellt, die an mit dem Hebelarm 8 fest verbundenen Tragarmen 19 angebracht sind, die nach Art von Auslegern die Zusatzgewichte 16 beabstandet von dem Hebelarm 8 tragen. In Fig. 4 sind Zusatzgewichte 17 dargestellt, die unter Verwendung von Federelementen 21 an Tragarmen 19 angebracht sind. In Fig. 5 ist ein Zusatzgewicht 18 dargestellt, das als Pendelgewicht an einem Schwerependel 22 angebracht ist, welches Schwerependel 22 an dem freien Ende des Kraftarmes 11 angebracht sind.

Die Hebeleinrichtung 6 umfaßt zwei mit dem Hebelgestänge 7 verbundene, zusätzliche Bewegungselemente in Gestalt von mit Rollen versehenen, auf einer schiefen Ebene 24 verfahrbaren Gewichte 23. Diese Gewichte 23 sind beabstandet von dem Drehpunkt 9 des Hebelarmes 8, nämlich an dem freien Ende des Lastarmes 12, unter Verwendung von Zugseilen 25 mit dem Hebelarm 8 verbunden. Die sich gegenüberliegende, entsprechend der Richtung der Pendelbewegung 10 verfahrbare Gewichte 23 vollführen bei einer Bewegung der Hebeleinrichtung 6 eine periodische lineare Bewegung 26, indem sie jeweils abhängig von der Pendelstellung entlang der schiefen Ebene 24 verfahren werden. Dies erfolgt derart, daß bei einer Bewegung des Hebelgestänges 7 in die erste Pendelstellung das eine Gewicht 23 die schiefe Ebene 24 hochgezogen wird, während das andere Gewicht 23 die zweite schiefe Ebene 24 herunterfährt, wie in Fig. 2 abgebildet; bei der entgegengesetzten Bewegung des Hebelgestänges 7 in die zweite Pendelstellung bewegen sich die Gewichte 23 genau entgegengesetzt. Anstelle der Zugseile 25 können auch starre Verbindungselemente zwischen dem Hebelarm 8 und den Gewichten 23 verwendet werden, sofern diese an den Verbindungsstellen entsprechend gelenkig ausgeführt sind. Ist - in Abwandlung von Fig. 3 - ein an einem Tragarm angebrachtes Zusatzgewicht 16 an nur einer Seite des Hebelarmes 8 vorgesehen, ist ein Tragarm 19 mit einem solche asymmetrischen Zusatzgewicht 16 insbesondere zwischen dem Drehpunkt 9 und dem freien Ende des Kraftarms 11 angebracht, können die zusätzliche Bewegungselemente, hier in Gestalt verfahrbarer Gewichte 23, auch unterschiedlich schwer sein.

Alternativ zu auf schiefen Ebenen 24 verfahrbaren Gewichten 23 können diese Gewichte auch auf Wippen verfahren werden (nicht abgebildet), die als weitere Hebelvorrichtungen dienen. Durch die Verwendung solcher Wippen können für den Antrieb des Stromgenerators 5 ebenfalls große Drehmomente erzeugt werden, insbesondere in Kombination mit zusätzlichen, von den Wippe betätigten weiteren Hebelvorrichtungen und/oder Kraftwandlern.

Alternativ zu auf schiefen Ebenen 24 verfahrbaren Gewichten 23 können zusätzliche Bewegungselemente auch derart vorgesehen sein, daß an dem freien Ende des Lastarmes 12 zwei nach Art von Auslegern ausgeführte, sich gegenüberliegende Tragarme 19 vorgesehen sind, an deren freien Enden Gewichte angebracht sind, welche Gewichte bei einer Pendelbewegung des Hebelarmes 8 auf weitere Hebelvorrichtungen wirken, um für den Antrieb des Stromgenerators ebenfalls große Drehmomente zu erzeugen (nicht abgebildet).

Die Wirkverbindung zwischen der ersten Antriebswelle 3 und der Hebeleinrichtung 6 wird in dem illustrierten Beispiel unter Verwendung eines Koppelgetriebes 27 hergestellt, das in Form einer Kurbelschleife ausgeführt ist, nämlich als Scotch-Yoke mit einer Gleitführung. Dabei wird ein Kurbelschleifen-Mechanismus verwendet, der die Drehbewegung 30 der ersten Antriebswelle 3 in eine lineare Bewegung 31 eines sich hin und her bewegenden Schiebers 28 umwandelt. Ein von der ersten Antriebswelle angetriebener Stift greift dabei in einen Schlitz eines Gleitbügels des Koppelgetriebes 27 ein, welcher Gleitbügel mit dem Schieber 28 verbunden ist (nicht im Detail abgebildet) . Über diesen Schieber 28 wird die Hebeleinrichtung 6 beaufschlagt, indem der Schieber 28 mit dem freien Ende des Kraftarmes 11 über ein vorzugsweise elastisch verformbares Zugseil 29 verbunden ist. Jedesmal, wenn sich der Schieber 28 von dem Hebelgestänge 7 weg bewegt, wird der Hebelarm 8 von dem Zugseil 29 mitgenommen und wird auf diese Weise in eine oszillierend-pendelnde Hin- und Her-Bewegung 10 versetzt.

Anstelle einer solchen einseitigen Zug-Beaufschlagung des Hebelgestänges 7 kann auch eine von beidseitige, von gegenüberliegenden Seiten auf das Hebelgestänge 7 wirkende Zugbeaufschlagung vorgesehen sein (nicht dargestellt).

Auch die Wirkverbindung zwischen der Hebeleinrichtung 6 und der zweiten Antriebswelle 4 wird unter Verwendung eines Koppelgetriebes 27 hergestellt. Dabei wird die von der Hin- und Her-Bewegung der Hebeleinrichtung 6 hervorgerufene lineare Bewegung 26 der beiden auf den schiefen Ebenen 24 verfahrbaren Gewichte 23 in eine Drehbewegung 30 der zweiten Antriebswelle 4 umgewandelt. In Fig. 2 ist dieses zweite Koppelgetriebe 27 lediglich angedeutet. Dies kann unter Zwischenschaltung eines Riemengetriebes mit unterschiedlich großen Riemenscheiben zwischen dem Koppelgetriebe 27 und der zweiten Antriebswelle 4 erfolgen (nicht dargestellt). Im dem hier skizzierten Beispiel ist nur auf einer Wirkseite des Hebelarmes 8 ein Stromgenerator 5 vorgesehen. Bei anderen Ausführungen können auch zwei Stromgeneratoren gleichzeitig betrieben werden, indem jedem verfahrbaren Gewicht 23 eine anzutreibende zweite Antriebswelle 4 zugeordnet ist.

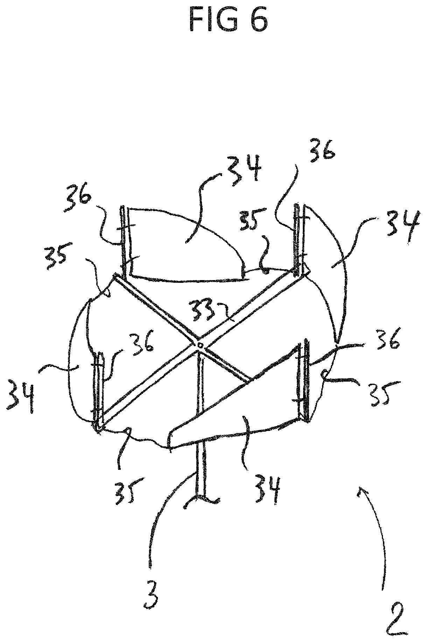

Der die senkrechte erste Antriebswelle 3 antreibende Vertikalrotor 2 umfaßt mehrere, in dem hier dargestellten Beispiel vier um die Rotorachse winkelmäßig gleichverteilte Rotorflügel, die als flexible, aus Segeltuch oder anderem geeigneten Material gefertigte Segel 34 ausgebildet sind. Die Segel 34 haben eine im wesentlichen dreieckige Form, wodurch auch diejenigen Segel angeströmt werden, die sich in diesem Augenblick in Strömungsrichtung dahinter befinden. Die Segel 34 sind selbständig um vertikale Schwenkachsen schwenkbar, indem sie an entsprechenden Masten 36 auf flexible Weise befestigt sind, hier beispielhaft mit Gummibändern. Die Segel 34 sind mit ihren mastabgewandten Seiten unter Verwendung von elastisch verformbaren Beschränkungselementen, beispielsweise in Gestalt von weiteren Gummibändern 35 oder anderen geeigneten Mitteln, an Außenkanten eines Drehgestänges 33 des Rotors 2 angebracht. Auf diese Weise können sich die Segel 34 einzeln selbsttätig in den Wind stellen bzw. aus dem Wind nehmen, wobei die Gummibänder 35 die Schwenkbereiche der Segel 34 beschränken, wie in Fig. 6 skizziert.

Bei der Angabe einer eine Erfindung definierenden Merkmalskombination müssen einzelne Merkmale aus der Beschreibung eines Ausführungsbeispiels nicht zwingend mit einem oder mehreren oder allen anderen in der Beschreibung dieses Ausführungsbeispiels angegebenen Merkmalen kombiniert werden; diesbezüglich ist jede Unterkombination von Merkmalen eines oder mehrerer Ausführungsbeispiele ausdrücklich mitoffenbart.

Außerdem können gegenständliche Merkmale der Vorrichtung umformuliert als Verfahrensmerkmale Verwendung finden und Verfahrensmerkmale können umformuliert als gegenständliche Merkmale der Vorrichtung Verwendung finden. Auf diese Weise umformulierte Merkmale sind implizit mitoffenbart.

### Bezugszeichenliste

- 1: Vorrichtung zur Erzeugung von elektrischem Strom
- 2: Vertikalrotor
- 3: erste Antriebswelle
- 4: zweite Antriebswelle
- 5: elektrischer Generator
- 6: Hebeleinrichtung
- 7: Hebelgestänge
- 8: Hebelarm
- 9: Drehpunkt
- 10: Pendelbewegung
- 11: Kraftarm
- 12: Lastarm
- 13: Zusatzgewicht
- 14: Zusatzgewicht
- 15: Zusatzgewicht
- 16: Zusatzgewicht
- 17: Zusatzgewicht
- 18: Zusatzgewicht
- 19: Tragarm
- 20: (frei)
- 21: Federelement
- 22: Schwerependel
- 23: Bewegungselement, Gewicht
- 24: schiefe Ebene
- 25: Zugseil
- 26: lineare Bewegung eines Bewegungselements
- 27: Koppelgetriebe
- 28: Schieber
- 29: Zugseil
- 30: Drehbewegung der ersten Antriebswelle
- 31: lineare Bewegung des Schiebers
- 32: Drehgestänge
- 33: Drehbewegung der zweiten Antriebswelle
- 34: Segel
- 35: Gummiband
- 36: Mast

## Patentansprüche

1. Windkraftbetriebene Vorrichtung (1) zur Erzeugung von elektrischem Strom,
- mit einem Vertikalrotor (2),
- mit einer ersten Antriebswelle (3), die von dem Vertikalrotor (2) antreibbar ist,
- mit einer zweiten Antriebswelle (4),
- mit einem elektrischen Generator (5), der von der zweiten Antriebswelle (4) antreibbar ist, und
- mit einer bewegbaren Hebeleinrichtung (6),
wobei die erste Antriebswelle (3) zum Antrieb der Hebeleinrichtung (6) mit dieser in Wirkverbindung steht, und
wobei die Hebeleinrichtung (6) zum Antrieb der zweiten Antriebswelle (4) mit dieser in Wirkverbindung steht,
und wobei die Hebeleinrichtung (6) ein Hebelgestänge (7) umfaßt, welches Hebelgestänge (7) derart ausgeführt ist, daß es eine Pendelbewegung (10) zwischen einer ersten Pendelstellung und einer zweiten Pendelstellung vollführen kann, ohne die Wirkverbindung zu der ersten Antriebswelle (3) und zu der zweiten Antriebswelle (4) zu verlieren,
**dadurch gekennzeichnet, daß** die Hebeleinrichtung (6) mindestens ein mit dem Hebelgestänge (7) unter Verwendung eines Verbindungselements (25) verbundenes zusätzliches Bewegungselement (23) umfaßt, wobei das mindestens eine zusätzliche Bewegungselement (23) derart ausgeführt ist, daß es bei einer Bewegung der Hebeleinrichtung (6) eine periodische lineare Bewegung (26) vollführt, und wobei die Wirkverbindung zwischen der Hebeleinrichtung (6) und der zweiten Antriebswelle (4) unter Verwendung dieses mindestens einen Bewegungselements (23) hergestellt ist.

2. Vorrichtung (1) nach Anspruch 1, wobei das Hebelgestänge (7) einen Hebelarm (8) umfaßt, der vorzugsweise nach Art eines inversen Pendels ausgeführt ist, wobei der Kraftarm (11) mit der ersten Antriebswelle (3) in Wirkverbindung steht und wobei der Lastarm (12) mit dem zweiten Antriebswelle (4) in Wirkverbindung steht.

3. Vorrichtung (1) nach Anspruch 1 oder 2, wobei die Hebeleinrichtung (6) ein mit dem Hebelgestänge (7) verbundenes Zusatzgewicht (13, 14, 15, 16, 17, 18) umfaßt.

4. Vorrichtung (1) nach Anspruch 3, wobei das Zusatzgewicht (13, 14, 15, 16) an einer oder mehreren Stellen des Hebelarmes (8) befestigt ist, insbesondere an dem freien Ende des Kraftarmes (11) und/oder an dem freien Ende des Lastarmes (12) und/oder an einem mit dem Hebelarm (8) fest verbundenen Tragarm (19), der nach Art eines Auslegers das Zusatzgewicht (16) beabstandet von dem Hebelarm (8) trägt.

5. Vorrichtung (1) nach Anspruch 3 oder 4, wobei das Zusatzgewicht (17) unter Verwendung eines elastisch verformbaren Verbindungselements (21), an dem Hebelarm (8) und/oder dem Tragarm (19) angebracht ist.

6. Vorrichtung (1) nach einem der Ansprüche 3 bis 5, wobei das Zusatzgewicht (18) an einem Schwerependel (22) als Pendelgewicht angebracht ist, welches Schwerependel (22) mit dem Hebelarm (8), insbesondere an dem freien Ende des Lastarmes (12) oder in der Nähe dieses freien Endes, und/oder dem Tragarm (19) verbunden ist.

7. Vorrichtung (1) nach einem der Ansprüche 1 bis 6, wobei die Wirkverbindung zwischen der ersten Antriebswelle (3) und der Hebeleinrichtung (6) und/oder die Wirkverbindung zwischen der Hebeleinrichtung (6) und der zweiten Antriebswelle (4) unter Verwendung eines als Übertragungsgetriebe mit Änderung der Bewegungsform wirkenden Koppelgetriebes (27) hergestellt ist.

8. Vorrichtung (1) nach einem der Ansprüche 1 bis 7, wobei die Wirkverbindung zwischen der ersten Antriebswelle (3) und der Hebeleinrichtung (6) unter Verwendung eines an der Hebeleinrichtung (6) angreifenden, vorzugsweise elastisch verformbaren Verbindungselements (29) hergestellt ist.

9. Vorrichtung (1) nach einem der Ansprüche 1 bis 8, wobei der Vertikalrotor (2) eine Anzahl um die Rotorachse winkelmäßig gleichverteilte Rotorflügel (34) umfaßt, wobei die Rotorflügel (34) derart ausgebildet und unter Verwendung von den Schwenkbereich der Rotorflügel (34) beschränkenden, vorzugsweise elastisch verformbaren Beschränkungselementen (35) an einem Drehgestänge (33) des Rotors (2) angebracht sind, daß sie sich einzeln selbsttätig in den Wind stellen bzw. aus dem Wind nehmen.

10. Vorrichtung (1) nach Anspruch 9, wobei die Rotorflügel (34) als selbständig um vertikale Schwenkachsen (36) schwenkbare, flexible Flügel, insbesondere Segel, ausgebildet sind.

11. Verfahren zur Erzeugung von elektrischem Strom durch Windkraft, bei dem
- ein Vertikalrotor (2) eine erste Antriebswelle (3) antreibt,
- eine mit der ersten Antriebswelle (3) in Wirkverbindung stehende, bewegbare Hebeleinrichtung (6) von der ersten Antriebswelle (3) angetrieben wird,
- die Hebeleinrichtung (6) eine zweite Antriebswelle (4) antreibt, zu welchem Zweck die Hebeleinrichtung (6) mit der zweiten Antriebswelle (4) in Wirkverbindung steht,
- ein mit der zweiten Antriebswelle (4) in Wirkverbindung stehender elektrischer Generator (5) von der zweiten Antriebswelle (4) angetrieben wird,
wobei die Hebeleinrichtung (6) ein Hebelgestänge (7) umfaßt, welches Hebelgestänge (7) derart ausgeführt ist, daß es eine Pendelbewegung (10) zwischen einer ersten Pendelstellung und einer zweiten Pendelstellung vollführt, ohne die Wirkverbindung zu der ersten Antriebswelle (3) und zu der zweiten Antriebswelle (4) zu verlieren,
**dadurch gekennzeichnet, daß** die Hebeleinrichtung (6) mindestens ein mit dem Hebelgestänge (7) unter Verwendung eines Verbindungselements (25) verbundenes zusätzliches Bewegungselement (23) umfaßt, wobei das mindestens eine zusätzliche Bewegungselement (23) derart ausgeführt ist, daß es bei einer Bewegung der Hebeleinrichtung (6) eine periodische lineare Bewegung (26) vollführt, und wobei die Wirkverbindung zwischen der Hebeleinrichtung (6) und der zweiten Antriebswelle (4) unter Verwendung dieses mindestens einen Bewegungselements (23) hergestellt ist.

## Claims

1. Wind-powered device (1) for generating electric current,
- with a vertical rotor (2),
- with a first drive shaft (3) that can be driven by the vertical rotor (2),
- with a second drive shaft (4),
- with an electric generator (5) that can be driven by the second drive shaft (4), and
- with a movable lever device (6),
wherein the first drive shaft (3) is operatively connected to the lever device (6) for driving the latter, and
wherein the lever device (6) is operatively connected to the second drive shaft (4) for driving the latter,
and wherein the lever device (6) comprises a lever linkage (7), which lever linkage (7) is designed such that it can perform a pendulum movement (10) between a first pendulum position and a second pendulum position without losing the operative connection to the first drive shaft (3) and to the second drive shaft (4), **characterised in that** the lever device (6) comprises at least one additional movement element (23) connected to the lever linkage (7) using a connecting element (25), wherein the at least one additional movement element (23) is designed such that it performs a periodic linear movement (26) when the lever device (6) moves, and wherein the operative connection between the lever device (6) and the second drive shaft (4) is established using this at least one movement element (23).

2. Device (1) according to claim 1,
wherein the lever linkage (7) comprises a lever arm (8) which is preferably designed in the manner of an inverted pendulum, wherein the force arm (11) is operatively connected to the first drive shaft (3) and wherein the load arm (12) is operatively connected to the second drive shaft (4).

3. Device (1) according to claim 1 or 2,
wherein the lever device (6) comprises an additional weight (13, 14, 15, 16, 17, 18) connected to the lever linkage (7).

4. Device (1) according to claim 3,
wherein the additional weight (13, 14, 15, 16) is attached at one or more points on the lever arm (8), in particular at the free end of the force arm (11) and/or at the free end of the load arm (12) and/or at a support arm (19) which is rigidly connected to the lever arm (8) and which, in the manner of a cantilever, carries the additional weight (16) at a distance from the lever arm (8).

5. Device (1) according to claim 3 or 4,
wherein the additional weight (17) is attached to the lever arm (8) and/or the support arm (19) using an elastically deformable connecting element (21).

6. Device (1) according to one of claims 3 to 5,
wherein the additional weight (18) is attached to a gravity pendulum (22) as a pendulum weight, which gravity pendulum (22) is connected to the lever arm (8), in particular at the free end of the load arm (12) or in the vicinity of this free end, and/or the support arm (19).

7. Device (1) according to one of claims 1 to 6,
wherein the operative connection between the first drive shaft (3) and the lever device (6) and/or the operative connection between the lever device (6) and the second drive shaft (4) is established using a coupling gear (27) acting as a transmission gear with change of movement form.

8. Device (1) according to one of claims 1 to 7,
wherein the operative connection between the first drive shaft (3) and the lever device (6) is established using a connecting element (29) that engages with the lever device (6) and is preferably elastically deformable.

9. Device (1) according to one of claims 1 to 8,
wherein the vertical rotor (2) comprises a number of rotor blades (34) distributed at equal angles around the rotor axis, wherein the rotor blades (34) are designed and attached to a rotary linkage (33) of the rotor (2) by means of restriction elements (35) limiting the pivoting range of the rotor blades (34), preferably elastically deformable restriction elements (35), in such a way that they automatically turn individually into or out of the wind.

10. Device (1) according to claim 9,
wherein the rotor blades (34) are designed as flexible blades, in particular sails, which can pivot independently about vertical pivot axes (36).

11. Method for generating electric current using wind power, wherein
a vertical rotor (2) drives a first drive shaft (3),
a movable lever device (6) operatively connected to the first drive shaft (3) is driven by the first drive shaft (3),
the lever device (6) drives a second drive shaft (4), for which purpose the lever device (6) is operatively connected to the second drive shaft (4),
an electric generator (5) operatively connected to the second drive shaft (4) is driven by the second drive shaft (4),
wherein the lever device (6) comprises a lever linkage (7), which lever linkage (7) is designed in such a way that it performs a pendulum movement (10) between a first pendulum position and a second pendulum position without losing the operative connection to the first drive shaft (3) and to the second drive shaft (4), **characterised in that** the lever device (6) comprises at least one additional movement element (23) connected to the lever linkage (7) by means of a connecting element (25), wherein the at least one additional movement element (23) is designed such that it performs a periodic linear movement (26) when the lever device (6) moves, and wherein the operative connection between the lever device (6) and the second drive shaft (4) is established using this at least one movement element (23).

## Revendications

1. Dispositif (1) alimenté par l'énergie éolienne pour produire du courant électrique,
- avec un rotor vertical (2),
- avec un premier arbre d'entraînement (3) pouvant être entraîné par le rotor vertical (2),
- avec un second arbre d'entraînement (4),
- avec un générateur électrique (5) pouvant être entraîné par le second arbre d'entraînement (4), et
- avec un dispositif à levier mobile (6),
le premier arbre d'entraînement (3) étant en liaison fonctionnelle avec le dispositif à levier (6) pour entraîner celui-ci, et
le dispositif à levier (6) étant en liaison fonctionnelle avec le second arbre d'entraînement (4) pour entraîner celui-ci,
et le dispositif à levier (6) comprenant une tringlerie de levier (7), laquelle tringlerie de levier (7) est conçue de telle sorte qu'elle peut effectuer un mouvement pendulaire (10) entre une première position pendulaire et une seconde position pendulaire sans perdre la liaison fonctionnelle avec le premier arbre d'entraînement (3) et avec le second arbre d'entraînement (4),
**caractérisé en ce que** le dispositif à levier (6) comprend au moins un élément de mouvement supplémentaire (23) relié à la tringlerie de levier (7) à l'aide d'un élément de liaison (25), ledit au moins un élément de mouvement supplémentaire (23) étant conçu de manière à effectuer un mouvement linéaire périodique (26) lors d'un mouvement du dispositif à levier (6), et la liaison fonctionnelle entre le dispositif à levier (6) et le second arbre d'entraînement (4) étant établie à l'aide dudit au moins un élément de mouvement supplémentaire (23).

2. Dispositif (1) selon la revendication 1,
dans lequel la tringlerie de levier (7) comprend un bras de levier (8) qui est de préférence conçu à la manière d'un pendule inversé, le bras de force (11) étant en liaison fonctionnelle avec le premier arbre d'entraînement (3) et le bras de charge (12) étant en liaison fonctionnelle avec le second arbre d'entraînement (4).

3. Dispositif (1) selon la revendication 1 ou 2,
dans lequel le dispositif à levier (6) comprend un poids additionnel (13, 14, 15, 16, 17, 18) relié à la tringlerie de levier (7).

4. Dispositif (1) selon la revendication 3,
dans lequel le poids additionnel (13, 14, 15, 16) est fixé à un ou plusieurs endroits du bras de levier (8), en particulier à l'extrémité libre du bras de force (11) et/ou à l'extrémité libre du bras de charge (12) et/ou à un bras de support (19) rigidement relié au bras de levier (8) et qui, à la manière d'une console, porte le poids additionnel (16) à distance du bras de levier (8).

5. Dispositif (1) selon la revendication 3 ou 4,
dans lequel le poids additionnel (17) est fixé au bras de levier (8) et/ou au bras de support (19) à l'aide d'un élément de liaison élastiquement déformable (21).

6. Dispositif (1) selon l'une des revendications 3 à 5,
dans lequel le poids additionnel (18) est fixé à un pendule de gravité (22) en tant que poids de pendule, lequel pendule de gravité (22) est relié au bras de levier (8), en particulier à l'extrémité libre du bras de charge (12) ou à proximité de cette extrémité libre, et/ou au bras de support (19).

7. Dispositif (1) selon l'une des revendications 1 à 6,
dans lequel la liaison fonctionnelle entre le premier arbre d'entraînement (3) et le dispositif à levier (6) et/ou la liaison fonctionnelle entre le dispositif à levier (6) et le second arbre d'entraînement (4) est établie à l'aide d'un engrenage d'accouplement (27) agissant comme un engrenage de transmission avec changement de forme de mouvement.

8. Dispositif (1) selon l'une des revendications 1 à 7,
dans lequel la liaison fonctionnelle entre le premier arbre d'entraînement (3) et le dispositif à levier (6) est réalisée à l'aide d'un élément de liaison (29) agissant sur le dispositif à levier (6), de préférence élastiquement déformable.

9. Dispositif (1) selon l'une des revendications 1 à 8,
dans lequel le rotor vertical (2) comprend un certain nombre de pales de rotor (34) réparties de manière angulairement égale autour de l'axe du rotor, les pales de rotor (34) étant conçues et montées de telle sorte qu'elles sont fixées à une tringlerie rotative (33) du rotor (2) à l'aide d'éléments de limitation (35) limitant la plage de pivotement des pales de rotor (34), de préférence des éléments de limitation élastiquement déformables (35), de manière à s'orienter automatiquement et individuellement dans le vent ou à l'opposé du vent.

10. Dispositif (1) selon la revendication 9,
dans lequel les pales de rotor (34) sont conçues comme des pales flexibles, en particulier des voiles, pouvant pivoter indépendamment autour d'axes de pivotement verticaux (36).

11. Procédé pour produire du courant électrique à partir de l'énergie éolienne, dans lequel
un rotor vertical (2) entraîne un premier arbre d'entraînement (3),
un dispositif à levier mobile (6) relié de manière fonctionnelle au premier arbre d'entraînement (3) est entraîné par le premier arbre d'entraînement (3),
le dispositif à levier (6) entraîne un second arbre d'entraînement (4), le dispositif à levier (6) étant en liaison fonctionnelle avec le second arbre d'entraînement (4) à cette fin,
un générateur électrique (5) en liaison fonctionnelle avec le second arbre d'entraînement (4) est entraîné par le second arbre d'entraînement (4),
le dispositif à levier (6) comprenant une tringlerie de levier (7), laquelle tringlerie de levier (7) est conçue de telle sorte qu'elle effectue un mouvement pendulaire (10) entre une première position pendulaire et une deuxième position pendulaire sans perdre la liaison fonctionnelle avec le premier arbre d'entraînement (3) et avec le second arbre d'entraînement (4),
**caractérisé en ce que** le dispositif à levier (6) comprend au moins un élément de mouvement supplémentaire (23) relié à la tringlerie de levier (7) à l'aide d'un élément de liaison (25), ledit au moins un élément de mouvement supplémentaire (23) étant conçu de manière à effectuer un mouvement linéaire périodique (26) lors d'un mouvement du dispositif à levier (6), et la liaison fonctionnelle entre le dispositif à levier (6) et le second arbre d'entraînement (4) étant établie à l'aide dudit au moins un élément de mouvement supplémentaire (23).
